# EUROPEAN PATENT APPLICATION

(11) **EP 0 791 453 A2**
(43) Date of publication of application: **27.08.1997**
(21) Application number: 97300673.7
(22) Date of filing: 03.02.1997
(51) Int. Cl.: B32B 15/08

(54) **Polymer/metal laminate and process for producing the same**

(30) Priority: 06.02.1996 GB 9602310
(71) Applicant: British Steel Corporation, London SE1 7SN (GB); DUNMORE CORPORATION, Newton, PA 18940 (US)
(72) Inventor: Busby, Nicholas James, Abergavenny, Gwent, NP7 7ED (GB); Ellis, Hedley, Loughr, Swansea, Sa4 6PL (GB); Kobren, Robin, Riegelsville, PA 18077 (US); Nasser, Shamba, Dresher, PA 19025 (US)
(74) Representative: Fry, Alan Valentine

(57) **Abstract**

A corrosion resistant steel strip comprises a steel substrate to one or both surfaces of which is bonded a transparent polymer film coated on one side with a bonding layer which includes a dispersed colouring media. The colouring media may initially be dispersed in an organic solvent which is subsequently removed by heating. Preferred polymers are polyethylene terephthalate and polypropylene. Polyvinyl chloride may also be used. Preferred bonding layers include polymers such as polyolefins or polyesters.

## Description

This invention relates to a laminated corrosion resistant steel strip and more especially to steel strip known commonly as a "tin mill products" coated on one or both sides with a polymer film. One such strip is known as Ferrolite (RTM). The invention also relates to methods of producing laminated corrosion resistant steel strip and products produced therefrom.

The term "tin mill product" includes steel strip and sheet (hereinafter referred to simply as "strip") subjected to a passivation or galvanising treatment. These products include electrolytic tin plate, electrolytic chromium/chromium oxide coated steel, and galvanised steel strip. These products are typically of a thickness between 0.05mm and 0.5mm.

Electrolytic tinplate and electrolytic chromium/chromium oxide coated steel are produced by coating the surfaces of thin gauge low carbon mild steel strip ( known as black plate), with impervious films of passive material by, for example, anodic or cathodic polarisation to reduce significantly the active state of these coated surfaces. Galvanised strip is produced by coating steel strip with a layer of zinc also to reduce significantly the active state of the coated surface or surfaces. With these processes, the thin gauge strip produced is resistant to corrosion.

Electrolytic tinplate is a low carbon mild steel strip coated with tin by electrodeposition. The tin coating can be deposited equally or differentially on each strip surface in a range of thicknesses.

Electrolytic chromium/chromium oxide coated steel strip (ECCS) is a low carbon, mild steel strip coated on both of its sides with a complex layer of chromium and chromium hydroxides applied by electrodeposition.

Electrolytic steel strip is used predominantly in the packaging industry.

Laminated corrosion resistant steel strip products such as that marketed under the trading style FERROLITE generally comprise a polymer film, typically polyethylene terepthalate (PET) or polypropylene (PP) bonded to a steel substrate, typically a tin mill substrate of 0.45 to 0.12mm gauge, using a bonding layer. The bonding layer may comprise any one of a number of polymers such as polyolefins or polyesters and it may be amorphous, crystalline or a combination thereof.

FERROLITE and similar products can be produced in a variety of colours, but only economically in large quantities, eg single colour batches in excess of 100 tonnes. In one process for producing coloured strips a dye or pigment is included in the resin from which the polymer film is extruded. This process suffers from the disadvantage that, because of the need thoroughly to clean the entire plant for each colour change, large quantities must be made requiring a very large market for a single colour. Also, the colouring agents employed may be extracted, ie leached, in use of the products. Consequently, this process is normally employed to produce general purpose white films in large batches.

In another process, the film is dyed after extrusion. This process cannot be used with polypropylene because it is incapable of absorbing colour. Small batches are possible using other polymers although disadvantages exist because the probable extraction of colouring agents limits its use in packaging applications. There is also a likelihood that the colouring agent will sublime out of the film in the laminating process.

In a third process, the film is lacquered or coated. This again allows small batches to be made of a selected colour. It suffers, however, from the disadvantage that if the product is scratched the underlying film colour (usually white or grey) shows through. The extraction problems referred to above are also a potential problem.

The present invention sets out to provide a process by which relatively small batches (typically of 10 tonnes or less) of laminated corrosion resistant steel strip of one of a range of selected colours can be produced economically. The invention also sets out to provide a process which overcomes, or at least alleviates, the disadvantage to be found in the existing processes discussed above. The invention further sets out to provide coloured corrosion resistant steel strip produced by this process.

According to the present invention in one aspect there is provided corrosion resistant steel strip which comprises a steel substrate to one or both surfaces of which is bonded a transparent polymer film coated on one side with a bonding layer which includes a dispersed colouring media.

The colouring media may initially be dispersed in an organic solvent which is subsequently removed by heating.

By "colouring media" is meant a matter which is visible to the eye and is of a colour or colours which stand out from the surface of the steel strip.

Preferred polymers are polyethylene terephthalate and polypropylene. Polyvinyl chloride may also be used. Preferred bonding layers include polymers such as polyolefins or polyesters.

The thickness of the polymer layer may be between 10 and 100 microns. Preferred ranges of thickness are between 10 and 80 microns, 12 and 50 microns, and 12 and 25 microns. The thickness of the bonding layer is typically 2mm.

The corrosion resistant strip may be passivated. The passivation treatment may be an electrolytic treatment in which the passivating material may be tin, chromium, chromium oxide, potassium titanium oxalate, titanium sulphate, zirconium sulphate or a phosphate of chromium, potassium, titanium or zirconium. Alternatively the corrosion resistant strip may be steel strip coated with zinc by a galvanising process. Other passivation treatments may however be employed.

In another aspect, there is provided a method of producing laminated corrosion resistant steel strip of a thickness between 0.05mm and 0.5mm, the method comprising the steps of applying to the or each surface of a steel substrate a transparent layer of a polymer selected from polyethylene terephthalate or polypropylene or polyvinyl chloride coated on one side with a bonding layer of a polymer including dispersed colouring media; and subjecting the coated steel strip to hot roll bonding.

The roll bonded strip may be subjected to further heating.

The steel strip is typically heated to a temperature of the order of 160°C before it is subjected to roll bonding. Roll bonding is typically effected by passing the strip through the nip of a pair of contra-rotating rolls. The or each polymer layer may be guided onto the or each side of the heated strip as it enters the roll nip for bonding thereto.

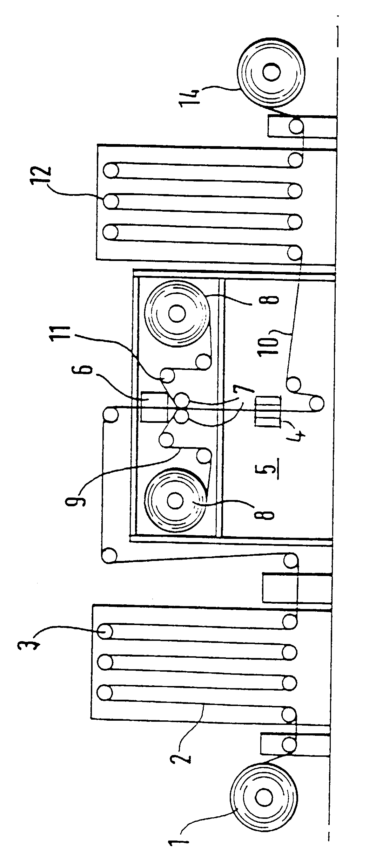

The invention will now be described by way of example only with reference to the accompanying diagrammatic drawings, in which the sole Figure illustrates typical apparatus for applying transparent polymer coatings to the surfaces of steel strip in accordance with the invention.

The illustrated apparatus comprises a coil 1 of passivated steel strip 2 of a thickness of between 0.05mm and 0.5mm which is passed around an accumulator 3 before being guided by rolls into a coating chamber 5. As the strip 2 enters the chamber 5 it passes through an induction heater 6 which heats the strip to a temperature of approximately 160° C. Below the heater 6 are positioned two contra-rotating rolls 7. The rolls may have a polished or mirrored surface. This finish may be achieved by using chromium or chromium coated rolls. Alternatively, rolls of hard rubber (e.g. VITON) or rolls having hard rubber surfaces may be employed.

Coils 8 of transparent polypropylene or polyethylene terephthalate films 9 are positioned within the coating chamber 5. The thickness of the polymer films 9 is preferably between 5 and 100 microns, a typical thickness being 20 microns.

Each film is coated on one of its sides with a bonding layer which carries a solvent in which is dispersed a colouring media. The bonding layer is on that side of the film which is intended to come into contact with the steel substrate. The colouring media typically comprises a dye or pigment and the solvent is typically an inorganic solvent such as a ketone or other aliphatic or aromatic hydrocarbon. The bonding layer comprises any one of a number of polymers such as polyolefins or polyester.

The transparent films 9 are guided towards the heated strip by a laminator including a series of tensioning and spreading rolls 11 which ensure that the interfaces between the films 9 and the strip are free of creases, stress lines and defects.

Bonding of the film layers onto the steel strip is effected by the rolls 7. During roll bonding, the colouring is media encapsulated between the transparent films and the steel substrate.

After roll bonding, the laminated strip 10 passes through a secondary heating furnace 4 at a temperature of the order of 260° to melt the film, the bonding layer and the colouring media.

The laminated strip 10 then passes via an accumulator 12 to a coiler 14. Some means of forced cooling, e.g. a quenching tank, may be provided within the coating chamber 5.

Laminated strip produced by this method generally comprises a coloured steel substrate of between 0.05 to 0.5mm thickness, a transparent bonding layer of approximately 2 microns thickness, and a transparent polyethylene terephthalate layer of between 10 and 100 microns thickness. Because the colouring material is encapsulated it is non-migratable once the polymer film has been bonded to the steel substrate. Thus, the polymer film acts as a barrier and the colouring material becomes an integral part of the polymer film.

In an alternative arrangement to that described, the colouring media is such as to impose a decoration effect on the steel substrate surface such as woodgrain or marble. Also, the colouring media may be such as to encapsulate messages, company logos and the like.

The polymer coatings especially on electrolytically chromium/chromium oxide coatings have been found to be particularly advantageous because passivation provides enhanced adhesion and corrosion resistance. In addition, experiments have confirmed that galvanised strip coated by the method of the present invention achieves considerable corrosion protection including cut edge protection.

It will be appreciated that the foregoing is merely exemplary of laminated strips, and methods for making such strips, and that modifications can readily be made thereto without departing from the true scope of the invention.

## Claims

1. A corrosion resistant steel strip which comprises a steel substrate to one or both surfaces of which is bonded a transparent polymer film coated on one side with a bonding layer which includes a dispersed colouring media.

2. A strip as claimed in claim 1 wherein the colouring media is initially dispersed in an organic solvent which is subsequently removed by heating.

3. A strip as claimed in claim 1 or claim 2 wherein the polymer is polyethylene terephthalate.

4. A strip as claimed in claim 1 or claim 2 wherein the polymer is polypropylene.

5. A strip as claimed in any one of claims 1 to 4 wherein the bonding layer comprises a polyolefin.

6. A strip as claimed in any one of claims 1 to 4 wherein the bonding layer comprises a polyester.

7. A strip as claimed in any one of claims 1 to 6 wherein the thickness of the polymer layer is between 10 and 100 microns.

8. A strip as claimed in claim 7 wherein the thickness of the polymer layer is between 10 and 80 microns.

9. A strip as claimed in claim 7 wherein the thickness of the polymer layer is between 12 and 50 microns.

10. A strip as claimed in claim 7 wherein the thickness of the polymer layer is between and 12 and 25 microns.

11. A strip as claimed in any one of the preceding claims wherein the thickness of the bonding layer is 2mm.

12. A strip as claimed in any one of the preceding claims wherein the corrosion resistant strip is passivated.

13. A strip as claimed in any one of claims 1 to 11 wherein the corrosion resistant strip is steel strip coated with zinc by a galvanising process.

14. A method of producing laminated corrosion resistant steel strip of a thickness between 0.05mm and 0.5mm, the method comprising the steps of applying to the or each surface of a steel substrate a transparent layer of a polymer selected from polyethylene terephthalate or polypropylene or polyvinyl chloride coated on one side with a bonding layer of a polymer including dispersed colouring media; and subjecting the coated steel strip to hot roll bonding.

15. A method as claimed in claim 14 wherein the roll bonded strip is subjected to further heating.

16. A method as claimed in claim 14 wherein the steel strip is heated to a temperature of the order of 160°C before it is subjected to roll bonding.

17. A method as claimed in any one of claims 14 to 16 wherein the or each polymer layer is guided onto the or each side of the heated strip as it enters the roll nip for bonding thereto.

18. A corrosion resistant steel strip substantially as herein described and as described with reference to the accompanying diagrammatic drawings.

19. A method of producing laminated corrosion resistant steel strip substantially as herein described and as described with reference to the accompanying diagrammatic drawings.
